# EUROPÄISCHE PATENTSCHRIFT

(11) **EP 1 516 861 B1**
(45) Veröffentlichungstag und Bekanntmachung des Hinweises auf die Patenterteilung: **02.11.2011**
(21) Anmeldenummer: 04022367.9
(22) Anmeldetag: 20.09.2004
(51) Int. Cl.: C03B 37/03, C03B 37/028

(54) **Vorrichtung und Verfahren zum Konfektionieren optischer Fasern**
Apparatus and method for manufacturing optical fibres
Dispositif et procédé de fabrication de fibres optiques

(30) Priorität: 22.09.2003 DE 10344207
(43) Veröffentlichungstag der Anmeldung: 23.03.2005
(73) Patentinhaber: Schott AG, 55122 Mainz (DE)
(72) Erfinder: Els, Wolfgang, 65527 Niedernhausen (DE); Willms, Lothar, 65375 Hallgarten (DE)
(74) Vertreter: Schweiger, Martin

(56) Entgegenhaltungen:
- US-A- 3 788 826
- US-B1- 6 425 545
- US-B1- 6 499 688
- PATENT ABSTRACTS OF JAPAN Bd. 008, Nr. 105 (P-274), 17. Mai 1984 (1984-05-17) -& JP 59 015907 A (NIPPON DENSHIN DENWA KOSHA), 27. Januar 1984 (1984-01-27)
- PATENT ABSTRACTS OF JAPAN Bd. 007, Nr. 134 (P-203), 11. Juni 1983 (1983-06-11) & JP 58 050503 A (DAINICHI NIPPON DENSEN KK), 25. März 1983 (1983-03-25)
- PATENT ABSTRACTS OF JAPAN Bd. 012, Nr. 446 (C-546), 24. November 1988 (1988-11-24) & JP 63 170238 A (HITACHI CABLE LTD), 14. Juli 1988 (1988-07-14)
- PATENT ABSTRACTS OF JAPAN Bd. 1999, Nr. 05, 31. Mai 1999 (1999-05-31) & JP 11 049429 A (SHIMADZU CORP), 23. Februar 1999 (1999-02-23)
- PATENT ABSTRACTS OF JAPAN Bd. 018, Nr. 044 (M-1547), 24. Januar 1994 (1994-01-24) & JP 05 270736 A (FUJIKURA LTD), 19. Oktober 1993 (1993-10-19)

## Beschreibung

Die Erfindung betrifft eine Vorrichtung und ein Verfahren zum Konfektionieren einer Vielzahl synchron hergestellter optischer Einzelfasern, insbesondere Mehrkomponentenglasfasern, aus einer Vielfaserriehanlage mit einer Ziehanlage sowie einem Aufwickler zum Aufwickeln der Fasern auf einer Aufwickelspule, wobei die Ziehanlage Mittel zur Erzeugung einer identischen, gleichbleibenden Ziehgeschwindigkeit der Fasern aufweist.

Vlelfaserziehanlagen zur Herstellung von Glasfasern sind im Stand der Technik bekannt. Dabei werden optische Fasern in einem Ziehofen aus Preformen geschmolzen und mittels einer Ziehanlage zu einem Aufwickler geführt, mittels dem die Fasern auf einer Aufwickelspule aufgewickelt werden. Hierzu werden im Stand der Technik Herstellungsweisen unterschieden, welche im Wesentlichen von der Art und Qualität der zu erzeugenden Glasfasern beziehungsweise der Geschwindigkeit der Fasererzeugung und der Anzahl der gleichzeitig herzustellenden Glasfasern abhängen.

Die Preformen bestehen zumindest aus einem Stab eines bestimmten Glasmaterials mit einem vorbestimmten Durchmesser. Für den Einsatz von Mehrkomponentenglasfasem in Glasfaserbündeln ist es jedoch erforderlich, dass die Glasfasern eine bestimmte Qualität hinsichtlich des Durchmessers jeder Glasfaser beziehungsweise der Durchmesservarianz mehrerer gleichzeitig hergestellter Glasfasern aufweisen, wobei eine optimale Reflexionsfähigkeit für das durch die Glasfaser geleitete Licht notwendig ist. Diese Eigenschaften werden bei Mehrkomponentenglasfasern durch mehrschichtige Preformen erzielt, welche einen Kernstab und zum Beispiel ein Mantelrohr umfassen. Die daraus gezogenen Glasfasern weisen einen Kern und einen damit verbundenen Mantel auf. Dabei werden die hohen Reflexionseigenschaften durch den Mantel erzeugt, welcher eine bestimmte Brechungszahl aufweist. Der Kemstab besteht aus einem Material mit einer höheren Brechzahl als die des Mantelmaterials, um die lichtleitenden und optischen Eigenschaften zu gewährleisten.

Beim Schmelzen der Preform wird mit dem Abtropfen des ersten Glastropfens das Mantelmaterial über das Kernmaterial gezogen und die beiden Materialien vereinigen sich.

Um die Materialstärken konstant zu halten und optimale optische Eigenschaften der unterschiedlichen Materialien in den Glasfasern zu erzeugen, ist es erforderlich, dass die Durchmesser der Glasfasern konstant gehalten werden. Darüber hinaus sind die Temperaturverläufe im Faserofen von entscheidender Bedeutung für die optischen und mechanischen Eigenschaften der daraus entstehenden Mehrkomponentenglasfasem.

Mit der JP 59015907 wird eine Mehrfaserziehanlage für optische Fasern beschrieben, welche einen Ofen zur gleichzeitigen Aufnahme mehrerer Preformen aus Glas und eine Beschichtungsvorrichtung sowie einen Trockenofen zum Trocknen des Beschichtungsmittels aufweist. Des Weiteren weist diese Anlage eine zweite Beschichtungsvorrichtung sowie einen entsprechenden Trockenofen auf, in welcher die Fasern eine Ummantelung erhalten. Schließlich weist die Anlage eine Umlenkrolle und eine Aufwickelrolle auf, mit Welcher das entstehende Kabel aus dem zweiten Trockenofen gezogen wird.

Diese Vorrichtung des Standes der Technik weist den Nachteil auf, dass die Preformen zwar gleichzeitig in den Ofen zugeführt werden, jedoch die Fasern nicht synchron abgezogen werden können, da innerhalb des Schmelzofens Temperaturunterschiede aufgrund der ungleichen Schmelzbedingungen für jede Preform ungleichmäßige Abschmelzgeschwindigkeiten bewirken. Der Abzug der Fasern erfolgt ausschließlich durch die Kabelaufwicklung wobei ein Ausgleich von Geschwindigkeitsunterschieden der einzellen Fasern nicht möglich. Dies führt dazu, dass die Ziehgeschwindigkeit bei den Fasern des Bündels ungleich ist, so dass es zu Faserbruch oder Filzen kommen kann.

Aus der US 2003/0079501 A1 ist eine Mehrfachziehanlage für Glasfasern bekannt, welche aus einschichtigen Preformen gezogen werden. Diese Preformen bestehen in der Regel aus Quarzglas, welches bei 2000 °C in einem Ziehofen geschmolzen wird Aus dem Ziehofen wird eine Faser abgezogen, deren Durchmesser in einem Ziehturm mit entsprechenden Mitteln hinsichtlich der Genauigkeit geprüft beziehungsweise vermessen und anschließend mit einem Polymermaterial beschichtet wird. Danach wird die Glasfaser auf einer Aufwickelspule aufgewickelt. Die so hergestellten Glasfasern aus Quarzglas werden üblicherweise in der Telekommunikationstechnik beziehungsweise für die Datenübertragung verwendet.

Sie werden wegen der erhöhten Anforderungen an die Durchmessergenauigkeit und wegen der damit notwendig werdenden Prüfmaßnahmen stets einzeln gezogen und nach dem Ziehofen auch einzeln nachverarbeitet. Die Verbesserungen, welche mit der US 2003/0079501 A1 erkannt wurden, bestehen gegenüber der bekannten Einzelfaserherstellung darin, mehrere gesondert für sich arbeitende Vorrichtungen zur Erzeugung von Einzelfasern parallel zu schalten, um eine dementsprechende Anzahl von Glasfasern gleichzeitig herstellen zu können.

Diese Herstellungsweise ist für die Erzeugung von Mehrkomponentenglasfasern ungeeignet, da in optischen Systemen aus Mehrkomponentenglasfasern eine Vielzahl von Glasfasern in Glasfaserbündel verwendet werden können, welche hinsichtlich der Durchmessergenauigkeit und der Beschichtung andere Anforderungen zu erfüllen haben. Es hat sich erwiesen, dass eine wirtschaftliche Herstellung derartiger Glasfaserbündel mit Einzelfaserziehvorrichtungen, auch wenn sie zu mehreren parallelgeschaltet sind, nicht möglich ist.

Insbesondere hat sich als Nachteil solcher Vorrichtungen erwiesen, dass trotz Parallelschaltung von mehreren Einzelfaserziehanlagen die Anzahl der Glasfasern erheblich unter dem Notwendigen begrenzt bleibt. Auch ist die auf die Einzelfaser bezogene Nachverarbeitung mit erheblichen Kosten verbunden, so dass eine Erzeugung von Faserbündeln für optische Systeme aus Mehrkomponentenglasfasern unwirtschaftlich wäre.

Gegenüber den für die Datenübertragung verwendeten Glasfasern kommt es bei Glasfaserbündeln aus Mehrkomponentenglasfasern weniger auf die Qualität der Einzelfasern als auf die des gesamten Glasfaserbündels an. Daneben spielen, anders als bei Datenübertragungsfasern, für die Verwendung von Glasfaserbündel aus Mehrkomponentenglasfasern Wirtschaftlichkeitserwägungen eine wesentlich größere Rolle.

Hierfür sind Ziehanlagen bekannt, bei welchen eine Vielzahl von Glasfasern gezogen und als Faserbündel nachverarbeitet wird. Jede Glasfaser wird dabei aus einer Preform gezogen. Um die gewünschte Anzahl an Glasfasern zu erhalten, werden entsprechend viele Preformen synchron geschmolzen.

Die Preformen bestehen dabei aus Kernstab und Mantelrohr mit unterschiedlichen Glasmaterialien, wobei jedes Material eine bestimmte Zusammensetzung aufweist, um die gewünschten optischen Eigenschaften der daraus gezogenen Mehrkomponentenglasfasern zu gewährleisten. Jede Preform besteht dabei üblicherweise aus einem Kernstab sowie zumindest einem Mantelrohr. Der Kernstab wird für den Schmelzvorgang in dem Mantelrohr angeordnet und gemeinsam an einer entsprechenden Aufhängung befestigt. Die Aufhängungen mit den einzelnen Preformen werden in entsprechender Anzahl nebeneinander an einer Tragscheibe befestigt und können so in die Heizbuchsen eines Ziehofens eingeführt werden. Jede Preform ist dabei einer Heizbuchse zugeordnet. Die Heizbuchsen im Ziehofen und die Aufhängungen der Preformen an der Tragscheibe sind dabei in korrespondierender Weise angeordnet.

Um die Preformen gemäß der Gesetzmäßigkeit des Massenflussgesetzes in den Ziehofen einführen und schmelzen zu können, ist die Tragscheibe mit einer geeignete Nachführung ausgestattet, welche einen vorbestimmten synchronen Vorschub aller Preformen ermöglicht. Des Weiteren weisen der Ziehofen beziehungsweise die Heizbuchsen entsprechende Mittel zur Temperaturregelung auf, so dass die Glasfasern unter gleichen Schmelzbedingungen von den Preformen gezogen werden können.

Um in ausreichender Weise die optischen Anforderungen an das Glasmaterial der Glasfasern und die physikalischen Eigenschaften der damit erzeugten Faserbündel zu gewährleisten, ist eine ausreichende Verarbeitungsgenauigkeit beim Schmelz- und Ziehvorgang zu gewährleisten, wobei insbesondere Schwankungen der Temperatur und der Ziehgeschwindigkeit an den einzelnen Fasern und somit Durchmesserschwankungen in den Fasern zu vermeiden sind. Dabei sollte gemäß dem Masseflussgesetz die Masse des geschmolzenen Glasmaterials und die Masse des als Glasfaser abgezogenen Glasmaterials konstant sein.

Außerdem soll die Anzahl der Fasern pro Faserbündel gleichbleibend sein, daher sind Schlaufenbildung und Bruch von einzelnen Fasern beim Ziehen und Konfektionieren zu vermeiden. Darüber hinaus kann es zweckmäßig sein, dass alle Fasern gleichmäßig mit Schlichtemittel versehen werden. Schließlich ist bei der Konfektionierung zu beachten, dass das Faserbündel so auf den Aufwickelspulen aufgewickelt wird, dass es bei der weiteren Verarbeitung problemlos wieder von der Aufwickelspule abgewickelt werden kann, ohne dass es zu Beschädigungen der Faserbündel oder der Einzelfasern kommt.

Damit die Herstellung der Faserbündel wirtschaftlich erfolgen kann, ist zu gewährleisten, däss eine Vielzahl von Fasern gleichzeitig verarbeitet werden kann.

Es hat sich gezeigt, dass bei Einzelführung der Fasern, wie im vorgenannten Stand der Technik dargestellt, mit anschließende Prüfung und Beschichtung, die vorgenannten Anforderungen an die Wirtschaftlichkeit nicht gewährleistet werden können.

Aufgabe der Erfindung ist es somit, die Nachteile des Standes der Technik zu überwinden und insbesondere eine Vorrichtung und ein Verfahren zum Konfektionieren optischer Fasern zur Verfügung zu stellen, wobei Faserbündel unter Wahrung der vorgenannten Qualitätserfordemisse mit geringem Aufwand und kostengünstig aus einer Vielzahl an Einzelfasern herstellbar und konfektionierbar sind, wobei eine synchrone, gleichmäßige Verarbeitung der gleichzeitig aus dem Ziehofen gezogenen Einzelfasern und eine direkte kontinuierliche Konfektionierung der daraus hergestellten Faserbündel gewährleistet ist und wobei eine fehlerfreie Weiterverarbeitung der konfektionierten Faserbündel ermögsich wird.

Ethe Lösung wird erfindungsgemäß durch eine Vorrichtung gemäß den kennzeichnenden Merkmalen des Anspruchs 1 und durch ein Verfahren gemäß den kennzeichnenden Merkmalen des Anspruchs 18 bereitgestellt. Erfindungsgemäße Weiterbildungen werden durch die jeweiligen. Unteransprüche beschrieben.

Die erfindungsgemäße Vorrichtung ist **dadurch gekennzeichnet, dass** der Aufwickler eine Ausgleichvorrichtung zum Ausgleich von Geschwindigkeitsdifferenzen der Fasern zwischen der Ziehanlage und der Aufwickelspule aufweist, dass die Ausgleichvorrichtung Mittel für den Ausgleich der Geschwindigkeitsänderung des Faserbündels beim Lagenwechsel und/oder auf Grund des veränderlichen Aufwickelradius verschiedener Lagen auf der Aufwickelspule aufweist, dass das Mittel für den Ausgleich der Geschwindigkeitsänderung einen Tänzerarm aufweist, an welchem eine Umlenkrolle zur Führung des Faserbündels drehbar befestigt ist und welche am Tänzerarm um den Lagerungspunkt des Tänzerarms einseitig parallel zu einer Rotationsebene der Aufwickelspule schwenkbar gehalten ist und dass die Umlenkrolle relativ zur Schwenkbewegung um den Lagerungspunkt schwingungsfähig am Tänzerarm gehalten ist.

Durch die Mittel zur Erzeugung einer identischen, gleichbleibenden Ziehgeschwindigkeit der Einzelfasern wird erreicht, dass jede Einzelfaser unter denselben Bedingungen hergestellt wird. Insbesondere wird erreicht, dass Schwankungen des Faserdurchmessers bei der Herstellung einer Faser vermieden werden. Die Schwankungen können somit in vorteilhafter Weise in einem Toleranzbereich von unter 1 µm gehalten werden. Durch die identische Ziehgeschwindigkeiten aller Fasern können Unterschiede, zwischen den Einzelfasern gering gehalten beziehungsweise nahezu vollständig vermieden werden.

Mit der Ausgleichvorrichtung wird erreicht, dass die von der Ziehanlage mit im Wesentlichen gleichbleibender Geschwindigkeit zum Aufwickler geführten Fasern kontinuierlich weiterverarbeitet werden können.

Die Geschwindigkeit der Ziehanlage hat großen Einfluss auf die Faserqualität und muss deshalb konstant gehalten werden. Erfindungsgemäß wird daher die Geschwindigkeit des Aufwicklers mittels der Ausgleichvorrichtung nach der Geschwindigkeit der Ziehanlage geregelt. Dadurch wird in vorteilhafter Weise erreicht, dass das Faserbündel ohne Rückwirkung auf die Ziehgeschwindigkeit aufgewickelt werden kann, womit auch Rückwirkungen auf den Schmelzprozess vermieden werden.

Die Einzelfasern durchlaufen in der Ziehanlage ein Beschlichtungsbad und werden gleichmäßig mit Schlichtemittel überzogen. Es ist des Weiteren gemäß der Erfindung vorgesehen, dass die Fasern in der Ziehanlage zu einem Faserbündel zusammenführbar sind. Damit wird in vorteilhafter Weise erreicht, dass die Fasern mit der noch feuchten Schlichtemasse gebündelt werden und als Faserbündel trocknen. Somit kann das Faserbündel bei der weiteren Verarbeitung besser gehandhabt werden, da die Einzelfasern durch die Schlichtemasse aneinander haften.

Zum Konfektionieren des Faserbündels wird mit der Erfindung vorgeschlagen, dass der Aufwickler eine Faserführereinheit aufweist und dass das Faserbündel kontinuierlich mittels der Faserführereinheit auf der Aufwickelspule verlegbar ist. Es ist somit in vorteilhafter Weise möglich, das fertige Faserbündel geordnet auf die Aufwickelspule aufzuwickeln. Somit werden Beschädigungen am Faserbündel vermieden, welche durch ungeordnete Wicklungen entstehen können. Des Weiteren wird erreicht, dass die Aufwickelspule problemlos wieder abgewickelt werden kann, so dass Fehler bei der Weiterverarbeitung, beispielsweise bei einer Kunststoffummantelung des Faserbündels, vermieden werden können.

Hierzu ist vorgesehen, dass die Faserführereinheit wenigstens einen steuerbaren Hubmechanismus aufweist, welcher einen Faserführer mit einer Führungsrolle zum Verlegen der Fasern über der Aufwickelspule beaufschlagt.

Eine erfinderische Weiterbildung der Vorrichtung wird dadurch zur Verfügung gestellt, dass der Aufwickler Lagenausgleichmittel für die Anpassung der Faserführereinheit an den veränderlichen Aufwickelradius und/oder zur Verkürzung der Bewicklungsbreite der Faserlagen auf der Aufwickelspule aufweist. Somit ist es möglich das Faserbündel mit einer Präzisionswicklung auf die Aufwickelspule zu wickeln.

Das Faserbündel wird dabei lagenweise auf die Aufwickelspule gewickelt, wobei die Veränderung des Abstandes der Führungsrolle zu der jeweils letzten Lage berücksichtigt werden kann. Dies ermöglicht, dass die einzelnen Lagen der Faserbündel unter gleichen Bedingungen auf der Aufwickelspule verlegt werden. Aber auch die Bewicklungsbreite der Lagen kann in einem vorgegebenen Maße symmetrisch auf beiden Seiten reduziert werden, womit gewährleistet werden kann, dass die Bewicklung in den seitlichen Endlagen stabilisiert wird. Dadurch wird eine erhöhte Randbefestigung der Lagen auf der Aufwickelspule erreicht und ein gleichmäßiges Abwickeln des Faserbündels bei der Weiterverarbeitung gewährleistet. Des Weiteren werden Beschädigungen vermieden, welche an herabgefallenen Wicklungen beim Transport und bei der Lagerung der vollen Aufwickelspulen entstehen könnten.

Schließlich wird mit dem Lagenausgleichmittel in vorteilhafter Weise auch erreicht, dass die Bewicklung jeder Lage in gleichbleibender Festigkeit erfolgen kann.

Dies wird dadurch erreicht, dass das Lagenausgleichmittel wenigstens einen steuerbaren Hubmechanismus aufweist, mit welchem der Verfahrweg des Faserführers und/oder der Führungsrolle in Abhängigkeit der Anzahl der Faserlagen auf der Aufwickelspule parallel und/oder radial zur Rotationsachse der Aufwickelspule steuerbar ist.

Es ist dabei vorgesehen, dass mittels einer Steuerungseinheit die jeweilige Lagenanzahl ermittelt wird und der Hubmechanismus, vorzugsweise eine Kehrgewindewelle, entsprechend eingestellt wird, um eine Hubverkürzug zur Reduzierung der Bewicklungsbreite zu erreichen. Dabei wird der Verfahrweg des Faserführers parallel zur Rotationsachse der Aufwickelspule verändert.

Es ist außerdem vorgesehen, dass ein weiterer Hubmechanismus entsprechend der Lagenanzahl von der Steuerungseinheit beaufschlagt wird, um den Faserführer beziehungsweise die Führungsrolle in Abhängigkeit von der Lagenanzahl radial zur Rotationsachse der Aufwickelspule zu verschieben, um einen im wesentlichen gleichbleibenden Abstand der Führungsrolle von der obersten Lage der Aufwickelspule einzuhalten und somit eine kontinuierlich hohe Präzision beim Aufwickeln zu erreichen.

Erfindungsgemäß ist vorgesehen, dass die Ausgleichvorrichtung Mittel für den Ausgleich der Geschwindigkeitsänderung des Faserbündels beim Lagenwechsel und/oder auf Grund des veränderlichen Aufwickelradius verschiedener Lagen auf der Aufwickelspule aufweist. Beim Lagenwechsel an den jeweiligen Wendepunkten des Längshubs ist der sogenannte Verlegevorschub nicht mehr vorhanden. Durch die Hubverkürzung und den gleichzeitigen Ausgleich der Änderung der Aufwickelgeschwindigkeit wird somit eine Lockerung der Wicklung an den Wendepunkten vermieden.

Außerdem würde sich die Ziehgeschwindigkeit des Faserbündels aufgrund des ständig größer werdenden Wicklungsradius beim Aufwickeln kontinuierlich vergrößern. Das muss vermieden werden. Die Aufwickelgeschwindigkeit wird durch die erfindungsgemäße Ausgleichvorrichtung konstant gehalten, indem die Drehzahl der Aufwickelspule entsprechend angepasst wird.

Hierzu ist vorgesehen, dass das Mittel für den Ausgleich der Geschwindigkeitsänderung einen Tänzerarm aufweist, an welchem eine Umlenkrolle zur Führung des Faserbündels drehbar befestigt ist und welche am Tänzerarm um den Lagerungspunkt des Tänzerarms einseitig parallel zu einer Rotationsebene der Aufwickelspule schwenkbar gehalten ist.

Zur geeigneten Führung des Faserbündels ist außerdem vorgesehen, dass die Umlenkrolle und die Aufwickelspule im wesentlichen zueinander parallele Rotationsachsen aufweisen.

Des Weiteren wird der Ausgleich der Geschwindigkeitsänderungen dadurch erreicht, dass die Umlenkrolle relativ zur Schwenkbewegung um den Lagerungspunkt schwingungsfähig am Tänzerarm gehalten ist. Die so gestaltete Führung des Faserbündels ermöglicht es, länger andauernde Geschwindigkeitsänderungen durch die Schwenkbewegung auszugleichen, während die Schwingungsfähigkeit der Umlenkrolle relativ zur vorbeschriebenen Schwenkbewegung es in erfindungsgemäßer Weise ermöglicht, kurzzeitige Geschwindigkeitsänderungen auszugleichen.

Beim Aufwickeln wird das Faserbündel über die Aufwickelspule verlegt, das heißt in Richtung der Längsachse der Aufwickelspule hin- und her bewegt. So wird eine Lage über der anderen auf die Aufwickelspule gebracht. An den Wendepunkten wird der Vorschub des Faserführers entsprechend von einer in die andere Richtung verändert, das heißt, dass die Aufwickelgeschwindigkeit des Faserbündels aufgrund der veränderten Vorschubgeschwindigkeit an den Wendepunkten vorübergehend sinkt und dann wieder anwächst. Diese Geschwindigkeitsänderung erfolgt sehr schnell. Dabei ist es für eine präzise Wicklung erforderlich, dass das Faserbündel während des äußerst kurzen Wendevorgangs des Faserführers straff geführt bleibt. Diese kurzen Geschwindigkeitsänderungen nimmt der Tänzerarm durch die Schwingungsfähigkeit der Umlenkrolle auf. Dabei wird die Umlenkrolle kurzfristig und ohne dass der Tänzerarm insgesamt um den Lagerungspunkt verschwenkt wird, zum Ausgleich der Geschwindigkeitsänderung aus einer Gleichgewichtsstellung bewegt und kann nach dem Wendepunkt schnell wieder in die Gleichgewichtsstellung rückkehren.

Hierzu ist in vorteilhafter Weise vorgesehen, dass der Tänzerarm zur Gewährleistung einer vorbestimmten Schwingungsfähigkeit der daran befestigten Umlenkrolle aus elastischem Material mit einem vorbestimmten Elastizitätsmodul, vorzugsweise aus Kunststoff, hergestellt ist. Alternativ dazu ist vorgesehen, dass der Tänzerarm zur Gewährleistung einer vorbestimmten Schwingungsfähigkeit der daran befestigten Umlenkrolle eine vorbestimmte Materialstärke und/oder -form aufweist.

Damit die Geschwindigkeitsdifferenzen trotz Rückstellung des Tänzerarms ausgleichbar sind, wird erfindungsgemäß vorgeschlagen, dass der Tänzerarm am Lagerungspunkt einem Drehwinkelgeber zugeordnet ist, mittels welchem Drehwinkeldaten zur Steuerung der Aufwickelgeschwindigkeit der Aufwickelspule an eine Geschwindigkeitssteuerung übermittelbar sind. Somit können Geschwindigkeitsdifferenzen des Aufwicklers während des Aufwickelns systematisch durch Veränderung der Drehzahl ausgeglichen werden. Dies erfolgt in vorteilhafter Weise mittels des Drehwinkelgebers, welcher erfasst, wie weit der Tänzerarm zum Ausgleich geschwenkt ist, und dementsprechend die Drehzahl der Aufwickelspule geändert wird. Durch die Änderung der Drehzahl der Aufwickelspule wird der Tänzerarm mittels Ausgleichskraft selbsttätig in die Gleichgewichtsstellung zurückgebracht. Der Tänzerarm wird somit stets in einem Gleichgewicht um die Gleichgewichtsstellung gehalten.

Beide Ausgleichsmöglichkeiten führen dazu, dass der Umlenkweg des Faserbündels in dem Faserführer während der Auslenkung beziehungsweise dem Verschwenken der Umlenkrolle verkürzt beziehungsweise verlängert wird, so dass das Faserbündel mit entsprechender Aufwickelgeschwindigkeit auf der Aufwickelspule verlegt wird.

Damit sowohl für die Hubverkürzung, für Maßnahmen zum Ausgleich der Geschwindigkeitsdifferenzen und für das Aufwickeln systematisch Werte vorgegeben werden können, wird erfindungsgemäß vorgeschlagen, dass die Ausgleichvorrichtung zum Ausgleich von Geschwindigkeitsdifferenzen und/oder das Lagenausgleichmittel für die Anpassung der Faserführereinheit mittels einer zentralen Datenverarbeitungseinheit regelbar ist.

Es ist außerdem erfindungsgemäß vorgesehen, dass der Tänzerarm mittels einer Kraft, vorzugsweise einem pneumatischen oder hydraulischen Zylinder, während des Zieh- und Aufwickelvorgangs in einer Gleichgewichtsstellung einstellbar ist. Die Gleichgewichtsstellung des Tänzerarms wird dabei durch die Kräfte festgelegt, welche auf einer Seite vom Zylinder und auf der anderen Seite vom Faserbündel auf den Tänzerarm wirken. Somit wird erreicht, dass sich der Tänzerarm während des Ziehvorgangs in einem vorgegebenen Winkel zum Faserbündel einstellt.

Des Weiteren ist vorgesehen, dass bei einem unerwünschten Faserbruch oder am Ende der Fasererzeugung, beispielsweise, wenn das Glasmaterial der Preformen verbraucht ist, der Aufwickelvorgang abgebrochen wird. Dazu wird erfindungsgemäß vorgeschlagen, dass der Tänzerarm mittels einer Kraft, vorzugsweise einem pneumatischen oder hydraulischen Zylinder, bei Unterbrechung oder Abbruch des Zieh- und Aufwickelvorgangs in eine Nullstellung verfahrbar ist.

In der Nullstellung wird dann erfindungsgemäß der Aufwickler gestoppt. Der Tänzerarm befindet sich auch beim Einrichten der Vorrichtung in Nullstellung bis das Faserbündel auf der Aufwickelspule befestigt ist. Anschließend wird der Prozess angefahren und der Tänzerarm wird aus der Nullstellung bewegt, so dass die erfindungsgemäße Geschwindigkeitsregelung auf die Ziehgeschwindigkeit eingestellt wird. Von Vorteil dabei ist, dass alle Fasern beim Einrichten der Vorrichtung gleichzeitig aufgenommen werden können.

Des Weiteren ist vorgesehen, dass über den Tänzerarm, vorzugsweise mittels eines einstellbaren pneumatischen oder hydraulischen Zylinders, eine Spannung im Faserbündel einstellbar ist. Der Tänzerarm wird dabei mittels des Pneumatik- oder Hydraulikzylinders mit einer einstellbaren Kraft beaufschlagt, durch welche im Faserbündel die Spannung zum Aufwickeln des Faserbündels erzeugt wird. Diese Spannung ermöglicht eine feste, geordnete Bewicklung.

In vorteilhafter Weise ist es dabei möglich, alle vorbeschriebenen Maßnahmen mit dem selben pneumatischen oder hydraulischen Zylinder zu realisieren.

Da der Ziehprozess nicht unterbrochen werden darf, ist es erforderlich, dass die Konfektionierung mittels Aufwickelspule kontinuierlich erfolgt. Der Aufwickelprozess muss daher beim Spulenwechsel ununterbrochen fortgeführt werden. Hierzu wird erfindungsgemäß vorgeschlagen, dass die Aufwickelspule austauschbar befestigt ist.

Sobald auf der Aufwickelspule die gewünschte maximale Wickellänge erreicht ist, erfolgt ein Spulenwechsel, wobei vorgesehen ist, dass zum Austausch der Aufwickelspule eine Nachfolgespule in Richtung der Spulenachse neben der Aufwickelspule platzierbar ist und dass die Faserführereinheit über die Nachfolgespule oder die Nachfolgespule unter die Faserführereinheit zum weiteren Verlegen des Faserbündels verfahrbar ist.

Dabei ist vorgesehen, dass die Drehzahl der Nachfolgespule beim Wechsel des Faserbündels von der vollen Aufwickelspule mittels Ausgleichvorrichtung über die zentrale Datenverarbeitungseinheit regelbar und/oder steuerbar ist. Hierdurch wird erreicht, dass zum einen die Verfahrgeschwindigkeit der Faserführereinheit und zum anderen die Veränderung des Aufwickelradius zwischen der vollen Aufwickelspule und der leeren Nachfolgespule ausgeglichen werden kann.

Die fertig aufgewickelte Spule kann somit aus ihrer Befestigung gelöst werden. Hierzu wird die volle Spule gestoppt und durch eine leere Spule ersetzt, welche im weiteren Prozess als Nachfolgespule dient.

Erfindungsgemäß wird des Weiteren das Verfahren zum Konfektionieren einer Vielzahl Synchron hergestellter optischer Einzelfasern mit der vorbeschriebenen Vorrichtung zur Verfügung gestellt, wobei die Fasern beschlichtet und gebündelt werden und über Umlenkmittel zum Aufwickler geführt werden, wobei Geschwindigkeitsdifferenzen des Faserbündels zwischen der Ziehanlage und dem Aufwickler mittels der Ausgleichvorrichtung ausgeglichen werden.

Zur Lösung der erfindungsgemäßen Aufgabe wird vorgeschlagen, dass Änderungen der Aufwickelgeschwindigkeit des Faserbündels auf der Aufwickelspule mittels der vom Drehwinkelgeber bereitgestellten Daten von der Geschwindigkeitsregelung durch Änderung der Drehzahl der Aufwickelspule ausglichen und/oder ein der Nullstellung des Tänzerarms entsprechendes Signal zum Anhalten des Aufwicklers an die Geschwindigkeitsregelung übermittelt werden. Hierdurch wird ermöglicht, dass die Geschwindigkeitsregelung die Drehzahl der Aufwickelspule stets an die Ziehgeschwindigkeit anpasst. Darüber hinaus ist es möglich, dass der Aufwickler selbsttätig abbricht, wenn das Faserbündel abbricht und der Tänzerarm in die Nullstellung verfährt, indem ein entsprechendes Nullstellungssignal an die Geschwindigkeitsregelung gesendet wird, mit welchem das Ende des Aufwickelvorganges initialisiert wird. Erst nachdem das Faserbündel wieder eingerichtet ist und der Tänzerarm vom Faserbündel wieder aus der Nullstellung gezogen wird, ist es möglich, die Drehzahl der Aufwickelspule entsprechend der Ziehgeschwindigkeit zu regeln.

Es ist weiter erfindungsgemäß vorgesehen, dass die Einzelfasern zur Erzeugung einer gleichbleibenden Zugspannung von der Ziehanlage bandförmig über wenigstens eine Beschlichtungswalze geführt werden. Die Einzelfasern liegen dabei mit Abstand nebeneinander auf der Beschlichtungswalze. Die Beschlichtungswalze befindet sich teilweise in einem Vorratsbehälter mit Schlichtemittel, wobei das Schlichtemittel die Walzenoberfläche gleichmäßig benetzt. Das Schlichtemittel wird dann von der Walzenoberfläche gleichmäßig auf die daran anliegenden Fasern übertragen.

Dabei ist vorgesehen, dass die Einzelfasern mittels der Abziehwalze in ihrer Gesamtheit jeweils mit gleicher Ziehgeschwindigkeit gezogen werden und über eine Nebenwalze gebündelt zum Aufwickler geführt werden. Die Fasern werden dabei, wie beim Beschlichten auch, bandförmig über die Abziehwalze geführt. Die nachgeordnete Nebenwalze sorgt dafür, dass die Fasern möglichst um den gesamten Umfang auf der Oberfläche der Abziehwalze anliegen, damit eine Übertragung der Zugkraft optimal und gleichförmig erfolgen kann.

Nach der Nebenwalze gehen die Fasern in ein Bündel über. Anschließend ist erfindungsgemäß vorgesehen, dass das Faserbündel vom Aufwickler in Abhängigkeit von der Ziehgeschwindigkeit der Abziehwalze aufgenommen wird. Die Geschwindigkeit des Aufwicklers folgt somit der Geschwindigkeit der Abziehwalze.

Des Weiteren ist vorgesehen, dass das Faserbündel mittels Faserführereinheit über die Führungsrolle lagenweise, vorzugsweise mit einstellbarem Versatz je Lage, auf der Aufwickelspule aufgewickelt wird. Erfindungsgemäß wird dies dadurch erreicht, dass der Versatz durch das einstellbare Verhältnis von Hubzahl des Faserführers zur Drehzahl oder Geschwindigkeit des Aufwicklers festgelegt wird.

Durch den Versatz wird in vorteilhafter Weise erreicht, dass ein gewünschtes Wickelbild auf der Aufwickelspule entsteht. Hierdurch wird ermöglicht, dass bei der folgenden Weiterverarbeitung das Abwickeln des Faserbündels von der Spule störungsfrei erfolgen kann.

Dies wird dadurch erreicht, dass der Faserführer mit der Führungsrolle mittels steuerbaren Hubmechanismus zum präzisen Verlegen der Fasern über der Aufwickelspule parallel zur Spulenlängsachse zyklisch hin und her verfahren wird. Dabei ist vorgesehen, dass die Bewicklungsbreite der Faserlagen auf der Aufwickelspule in Abhängigkeit der Gesamtlagenanzahl durch beidseitige Reduzierung des Faserführerhubs symmetrisch verkürzt wird.

Um eine optimale Präzisionswicklung zu erreichen ist vorgesehen, dass der Faserführer mit der Führungsrolle mittels steuerbaren Hubmechanismus zur Gewährleistung eines gleichbleibenden Abstandes zwischen der Führungsrolle und der obersten Lage der Aufwickelspule radial zur Rotationsachse der Aufwickelspule kontinuierlich verfahren wird.

Dabei ist vorgesehen, dass die Faserführereinheit kontinuierlich an den, in Abhängigkeit der Gesamtlagenanzahl auf der Aufwickelspule, veränderlichen Aufwickelradius angepasst wird.

Das erfindungsgemäße Verfahren wird dadurch weitergebildet, dass zum Austausch der Aufwickelspule eine Nachfolgespule auf der Spulenachse neben der Aufwickelspule platziert wird. Dabei kann das Faserbündel von der vollen Spule in einfacher Weise linear zur leeren Nachfolgespule geführt werden.

Dies wird dadurch erreicht, dass die Faserführereinheit beim Spulenwechsel, vorzugsweise mittels eines Verfahrtisches, über die Nachfolgespule gefahren wird. Vorzugsweise erfolgt dieser Wechsel bei einem Hub in Richtung der Nachfolgespule.

Alternativ kann dieser Effekt auch dadurch erreicht werden, dass die Nachfolgespule beim Spulenwechsel bei gleichzeitigem Verschieben der Aufwickelspule unter die Faserführereinheit gefahren wird. Bei dieser Ausgestaltung des Spulenwechsels ist es nicht erforderlich, die Faserführereinheit auf einem Verfahrtisch zu bewegen.

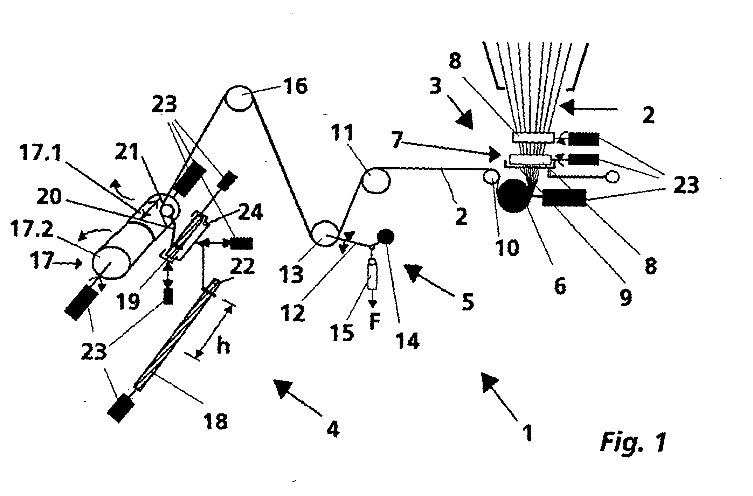

Die Erfindung wird im Folgenden anhand der Zeichnung erläutert. Es zeigt
- Figur 1: eine schematische Darstellung der erfindungsgemäßen Vorrichtung.

In Figur 1 ist die erfindungsgemäße Vorrichtung 1 zum Konfektionieren einer Vielzahl synchron hergestellter optischer Einzelfasern 2 aus einer Ziehanlage 3 mit einem Aufwickler 4 und einer Ausgleichvorrichtung 5 dargestellt.

Die Ziehanlage 3 umfasst eine Abziehwalze 6. Der Abziehwalze 6 ist eine Beschlichtungsanlage 7 vorgeordnet, welche die Fasern 2 mittels Beschlichtungswalzen 8 durch Beschlichtungsbäder 9 führt. Die Fasern 2 werden beim Beschlichten bandförmig nebenein auf der Beschlichtungswalze 8 liegend mit einem Schlichtemittel benetzt und zur Abziehwalze 6 geführt. Auf der Abziehwalze 6 werden die Fasern 2 bandförmig aufgenommen und mit einer vorgegebenen Ziehgeschwindigkeit gezogen. Mittels einer Nebenwalze 10 werden die Fasern 2 um die Abziehwalze 6 gelenkt, damit alle Fasern 2 gleichmäßig gezogen werden können. Die Abziehwalze 6 gibt somit den Vorschub vor, mit dem die Fasern 2 weiterverarbeitet werden müssen.

Von der Nebenwalze 10 werden die Fasern 2 gebündelt über Umlenkrollen 11 sowie über die Ausgleichvorrichtung 5 zum Aufwickler 4 geführt. Die Ausgleichvorrichtung 5 umfasst Mittel für den Ausgleich der Geschwindigkeitsänderung des Faserbündels 2. Diese Mittel umfassen eine an einem Tänzerarm 12 befestigte Umlenkrolle 13. Der Tänzerarm 12 ist endseitig an einem Lagerungspunkt 14 schwenkbar befestigt. Der Tänzerarm 12 ist aus elastischem Material und gewährleistet somit die Schwingungsfähigkeit der Umlenkrolle 13 relativ zur Schwenkbewegung um den Lagerungspunkt 14.

Zur Rückstellung des Tänzerarms 12 in eine Gleichgewichtsstellung ist dem Tänzerarm 12 eine Ausgleichskraft zugeordnet, welche entgegen der Schwenkbewegung des Tänzerarms 12 wirkt. Der Tänzerarm 12 wird hierzu mittels eines pneumatischen- oder hydraulischen Zylinders 15 mit einer Kraft F beaufschlagt, welche eine Spannung im Faserbündel 2 vorgibt. Die Kraft F ist vorzugsweise am Zylinder 15 einstellbar.

Über weitere Umlenkrollen 16 wird das Faserbündel 2 zum Aufwickler 4 geführt, wo es auf einer Aufwickelspule 17 aufgewickelt wird. Zum präzisen Aufwickeln ist der Aufwickelspule 17 eine auf einem Verfahrtisch 18 angeordnete Faserführereinheit 19 mit einem Faserführer 20 und einer Führungsrolle 21 vorgeordnet.

Das aus der Ausgleichvorrichtung 5 ankommende Faserbündel 2 wird von der Führungsrolle 21 aufgenommen und über der Aufwickelspule 17 verlegt. Hierzu ist die Führungsrolle 21 an dem Faserführer 20 befestigt, welcher die Führungsrolle 21 mittels eines Hubmechanismus 22 in Richtung der Längsachse der Aufwickelspule 17 hin und her verschiebt.

Damit der Abstand zwischen der obersten Lage auf der Aufwickelspule 17 und der Führungsrolle 21 konstant bleibt, ist der Faserführer 20 radial zur Rotationsachse der Aufwickelspule 17 bewegbar und wird entsprechend der Anzahl der bereits verlegten Lagen von der Achse der Aufwickelspule 17 mittels eines weiteren Hubmechanismus 24 wegbewegt.

Vor einem Spulenwechsel, welcher erfolgt, wenn eine Aufwickelspule 17.1 voll ist, wird eine Nachfolgespule 17.2 neben der Aufwickelspule 17.1 platziert. Der Faserführer 20 wird elektronisch gesteuert mittels des Hubmechanismus 22 um den Verfahrweg h über die Nachfolgespule 17.2 gefahren. Danach kann die volle Aufwickelspule 17.1 entnommen und durch den leeren Spulenkörper der Nachfolgespule 17.2 ersetzt werden. Der darauf folgende Spulenwechsel erfolgt in umgekehrter Reihenfolge.

Die angetriebenen Bauelemente der Zieh- und Beschlichtungsanlage 3, 7 und der Faserführereinheit 19 sowie die Aufwickelspule 17 werden mit Servomotoren 23 angetrieben und über eine nicht dargestellte elektronische Datenverarbeitungseinheit gesteuert.

Treten Geschwindigkeitsdifferenzen zwischen dem Vorschub der Fasern 2 an der Abziehwalze 6 und dem Faserbündel 2 beim Aufwickeln auf die Aufwickelspule 17 auf, beispielsweise aufgrund des wachsenden Wicklungsradius, bei einem Lagenwechsel auf der Aufwickelspule 17 oder beim Spulenwechsel, so wird dementsprechend der Umlenkweg des Faserbündels 2 durch die Ausgleichvorrichtung 5 reduziert oder vergrößert. Diese Anpassung wird über die Bewegung der Umlenkrolle 13 vorgenommen. Dabei kann zum einen der Tänzerarm 12 am Lagerungspunkt 14 geschwenkt werden. Diese Geschwindigkeitsänderungen werden über einen nicht dargestellten Drehwinkelgeber an eine elektronische Geschwindigkeitssteuerung übermittelt, welche die Aufwickelgeschwindigkeit der Aufwickelspule 17 entsprechend ändert. Der Tänzerarm 12 verfährt dann wieder, durch die Ausgleichskraft F beaufschlagt, in seine Gleichgewichtsstellung.

Kurzzeitige Geschwindigkeitsdifferenzen werden durch die Schwingungsfähigkeit der Umlenkrolle 13 relativ zur Schwenkbewegung des Tänzerarms 12 ausgeglichen. Diese Geschwindigkeitsdifferenzen treten im Wesentlichen beim Lagenwechsel an den Wendepunkten der Lagen auf, wenn der Verlegevorschub naturgemäß kurzfristig reduziert wird.

Auch beim Spulenwechsel treten systembedingt Geschwindigkeitsdifferenzen auf, wenn die Faserführereinheit 19 mit eigener Verfahrgeschwindigkeit über eine leere Aufwickelspule 17 verfahren wird. Auch diese Geschwindigkeitsdifferenzen werden durch die Ausgleichvorrichtung 5 korrigiert.

Durch die erfindungsgemäßen Maßnahmen der Ausgleichvorrichtung 5 ist es somit möglich die Fasern zu Faserbündeln 2 zusammenzufassen und auf Aufwickelrollen 17 zu Konfektionieren, ohne dass störende Einflüsse auf den Herstellungsprozess rückwirken. Beim Aufwickeln wird Schlaufenbildung einzelner Fasern im Faserbündel 2 nahezu vollständig vermieden, wodurch Faserbündel 2 mit hoher optischer Qualität herstellbar sind.

Die Anpassung der Aufwickelgeschwindigkeit an die Ziehgeschwindigkeit der Abziehwalze 6, die Einstellbarkeit des Verhältnisses der Hubzahl des Faserführers 20 zur Drehzahl oder Geschwindigkeit des Aufwicklers 4 und der Ausgleich von Lagedifferenzen an der Faserführereinheit 19 ermöglichen eine präzise Wicklung, welche sowohl einen umfangsmäßigen Versatz der einzelnen Lagen einschließt als auch eine kontinuierliche symmetrische Reduzierung der Bewicklungsbreite, so dass auch beim Weiterverarbeiten, dem Transport, der Lagerung und dem späteren Abwickeln der vollen Aufwickelspulen 17 Störungen beziehungsweise Zerstörungen vermieden werden.

### Bezugszeichenliste

- 1: Vorrichtung
- 2: Einzelfaser / Faserbündel
- 3: Ziehanlage
- 4: Aufwickler
- 5: Ausgleichvorrichtung
- 6: Abziehwalze
- 7: Beschlichtungsanlage
- 8: Beschlichtungswalzen
- 9: Beschlichtungsbäder
- 10: Nebenwalze
- 11: Umlenkrolle
- 12: Tänzerarm
- 13: Umlenkrolle
- 14: Lagerungspunkt
- 15: Zylinder
- 16: Umlenkrolle
- 17: Aufwickelspule
- 17.1: volle Aufwickelspule
- 17.2: Nachfolgespule
- 18: Verfahrtisch
- 19: Faserführereinheit
- 20: Faserführer
- 21: Führungsrolle
- 22: Hubmechanismus
- 23: Servomotor
- 24: Hubmechanismus

- h: Verlegevorschub
- F: Ausgleichskraft

## Patentansprüche

1. Vorrichtung (1) zum Konfektionieren einer Vielzahl synchron hergestellter optischer Einzelfasern (2), insbesondere Mehrkomponentenglasfasern, aus einer Vielfaserziehanlage mit einer Ziehanlage (3) sowie einem Aufwickler (4) zum Aufwickeln der Fasern (2) auf einer Aufwickelspule (17), wobei die Ziehanlage (3) Mittel zur Erzeugung einer identischen, gleichbleibenden Ziehgeschwindigkeit der Fasern (2) aufweist,
**dadurch gekennzeichnet,**
**dass** der Aufwickler (4) eine Ausgleichvorrichtung (5) zum Ausgleich von Geschwindigkeitsdifferenzen der Fasern (2) zwischen der Ziehanlage (3) und der Aufwickelspule (17) aufweist, dass die Ausgleichvorrichtung (5) Mittel für den Ausgleich der Geschwindigkeitsänderung des Faserbündels (2) beim Lagenwechsel und/oder auf Grund des veränderlichen Aufwickelradius verschiedener Lagen auf der Aufwickelspule (17) aufweist, dass das Mittel für den Ausgleich der Geschwindigkeitsänderung einen Tänzerarm (12) aufweist, an welchem eine Umlenkrolle (13) zur Führung des Faserbündels (2) drehbar befestigt ist und welche am Tänzerarm (12) um den Lagerungspunkt (14) des Tänzerarms (12) einseitig parallel zu einer Rotationsebene der Aufwickelspule (17) schwenkbar gehalten ist und dass die Umlenkrolle (13) relativ zur Schwenkbewegung um den Lagerungspunkt (14) schwingungsfähig am Tänzerarm (12) gehalten ist.

2. Vorrichtung (1) nach Anspruch 1,
**dadurch gekennzeichnet,**
**dass** die Fasern (2) in der Ziehanlage (3) zu einem Faserbündel zusammenführbar sind.

3. Vorrichtung (1) nach einem der Ansprüche 1 und 2,
**dadurch gekennzeichnet**
**dass** der Aufwickler (4) eine Faserführereinheit (19) aufweist und dass das Faserbündel (2) kontinuierlich mittels der Faserführereinheit (19) auf der Aufwickelspule (17) verlegbar ist.

4. Vorrichtung (1) nach Anspruch 3,
**dadurch gekennzeichnet,**
**dass** die Faserführereinheit (19) wenigstens einen steuerbaren Hubmechanismus (22) aufweist, welcher einen Faserführer (20) mit einer Führungsrolle (21) zum Verlegen der Fasern (2) über der Aufwickelspule (17) beaufschlagt.

5. Vorrichtung (1) nach einem der Ansprüche 3 oder 4,
**dadurch gekennzeichnet,**
**dass** der Aufwickler (4) Lagenausgleichmittel für die Anpassung der Faserführereinheit (19) an den veränderlichen Aufwickelradius und/oder zur Verkürzung der Bewicklungsbreite der Faserlagen auf der Aufwickelspule (17) aufweist.

6. Vorrichtung (1) nach Anspruch 5,
**dadurch gekennzeichnet,**
**dass** das Lagenausgleichmittel wenigstens einen steuerbaren Hubmechanismus (24) aufweist, mit welchem der Verfahrweg des Faserführers (20) und/oder der Führungsrolle (21) in Abhängigkeit der Anzahl der Faserlagen auf der Aufwickelspule (17) parallel und/oder radial zur Rotationsachse der Aufwickelspule (17) regelbar ist.

7. Vorrichtung (1) nach einem oder mehreren der Ansprüche 1 bis 6,
**dadurch gekennzeichnet,**
**dass** die Umlenkrolle (13) und die Aufwickelspule (17) im wesentlichen zueinander parallele Rotationsachsen aufweisen.

8. Vorrichtung (1) nach einem oder mehreren der Ansprüche 1 bis 7,
**dadurch gekennzeichnet,**
**dass** der Tänzerarm (12) zur Gewährleistung einer vorbestimmten Schwingungsfähigkeit der daran befestigten Umlenkrolle (13) aus elastischem Material mit einem vorbestimmten Elastizitätsmodul, vorzugsweise aus Kunststoff, hergestellt ist.

9. Vorrichtung (1) nach einem oder mehreren der Ansprüche 1 bis 8,
**dadurch gekennzeichnet**
**dass** der Tänzerarm (12) zur Gewährleistung einer vorbestimmten Schwingungsfähigkeit der daran befestigten Umlenkrolle (13) eine vorbestimmte Materialstärke und/oder -form aufweist.

10. Vorrichtung (1) nach einem oder mehreren der Ansprüche 1 bis 9,
**dadurch gekennzeichnet,**
**dass** der Tänzerarm (12) am Lagerungspunkt (14) einem Drehwinkelgeber zugeordnet ist, mittels welchem Drehwinkeldaten zur Steuerung der Aufwickelgeschwindigkeit der Aufwickelspule (17) an eine Geschwindigkeitssteuerung übermittelbar sind.

11. Vorrichtung (1) nach einem oder mehreren der Ansprüche 1 bis 10,
**dadurch gekennzeichnet,**
**dass** die Ausgleichvorrichtung (5) zum Ausgleich von Geschwindigkeitsdifferenzen und/oder das Lagenausgleichmittel für die Anpassung der Faserführereinheit (19) mittels einer zentralen Datenverarbeitungseinheit regelbar ist.

12. Vorrichtung (1) nach einem oder mehreren der Ansprüche 1 bis 11,
**dadurch gekennzeichnet,**
**dass** der Tänzerarm (12) mittels einer Ausgleichskraft (F), vorzugsweise einem pneumatischen oper hydraulischen Zylinder (15), während des Zieh- und Aufwickelvorgangs in einer Gleichgewichtsstellung einstellbar ist.

13. Vorrichtung (1) nach einem oder mehreren der Ansprüche 1 bis 12,
**dadurch gekennzeichnet,**
**dass** der Tänzerarm (12) mittels einer Ausgleichskraft (F), vorzugsweise einem pneumatischen oder hydraulischen Zylinder (15), bei Unterbrechung oder Abbruch des Zieh- und Aufwickelvorgangs in eine Nullstellung verfahrbar ist.

14. Vorrichtung (1) nach einem oder mehreren der Ansprüche 1 bis 13,
**dadurch gekennzeichnet,**
**dass** über den Tänzerarm (12), vorzugsweise mittels eines einstellbaren pneumatischen oder hydraulischen Zylinders (15), eine Spannung im Faserbündel (2) einstellbar ist.

15. Vorrichtung (1) nach einem oder mehreren der Ansprüche 1 bis 14,
**dadurch gekennzeichnet,**
**dass** die Aufwickelspule (17) austauschbar befestigt ist.

16. Vorrichtung (1) nach einem oder mehreren der Ansprüche 3 bis 15,
**dadurch gekennzeichnet,**
**dass** zum Austausch der vollen Aufwickelspule (17.1) eine Nachfolgespule (17.2) in Richtung der Spulenachse neben der vollen Aufwickelspule (17.1) platzierbar ist und dass die Faserführereinheit (19) über die Nachfolgespule (17.2) oder die Nachfolgespule (17.2) unter die Faserführereinheit (19) zum weiteren Verlegen des Faserbündels (2) verfahrbar ist.

17. Vorrichtung (1) nach Anspruch 16,
**dadurch gekennzeichnet,**
**dass** die Drehzahl der Nachfolgespule (17.2) beim Wechsel des Faserbündels (2) von der vollen Aufwickelspule (17.1) mittels Ausgleichvorrichtung (5) über die zentrale Datenverarbeitungseinheit regelbar und/oder steuerbar ist.

18. Verfahren zum konfektionieren einer Vielzahl synchron hergestellter optischer Einzelfasern (2) mit einer Vorrichtung (1) nach einem oder mehreren der Ansprüche 1 bis 17, wobei die Fasern (2) beschlichtet und gebündelt werden und über Umlenkmittel zum Aufwickler (4) geführt werden,
**dadurch gekennzeichnet,**
**dass** Geschwindigkeitsdifferenzen des Faserbündels (2) zwischen der Ziehanlage ' (3) und dem Aufwickler (4) mittels der Ausgleichvorrichtung (5) ausgeglichen wer den, dass Änderungen der Aufwickelgeschwindigkeit des Faserbündels (2) auf der Aufwickelspule (17) mittels der vom Drehwinkelgeber bereitgestellten Daten von der Geschwindigkeitsregelung durch Änderung der Drehzahl der Aufwickelspule (17) ausglichen und/oder ein der Nullstellung des Tänzerarms (12) entsprechendes Signal zum Anhalten des Aufwicklers (4) an die Geschwindigkeitsregelung übermittelt werden.

19. Verfahren nach Anspruch 18,
**dadurch gekennzeichnet,**
**dass** die Einzelfasern (2) zur Erzeugung einer gleichbleibenden Zugspannung von der Ziehanlage (3) bandförmig über wenigstens eine Beschlichtungswalze (8) geführt werden.

20. Verfahren nach einem der Ansprüche 18 oder 19,
**dadurch gekennzeichnet,**
**dass** die Einzelfasern (2) mittels der Abziehwalze (6) in ihrer Gesamtheit jeweils mit gleicher Ziehgeschwindigkeit gezogen werden und über eine Nebenwalze (10) gebündelt zum Aufwickler (4) geführt werden.

21. Verfahren nach einem oder mehreren der Ansprüche 18 bis 20,
**dadurch gekennzeichnet,**
**dass** das Faserbündel (2) mittels Faserführereinheit (19) über die Führungsrolle (21) lagenweise, vorzugsweise mit einstellbarem Versatz je Lage, auf der Aufwickelspule (17) aufgewickelt wird.

22. Verfahren nach Anspruch 21,
**dadurch gekennzeichnet,**
**dass** der Versatz durch das einstellbare Verhältnis von Hubzahl des Faserführers (20) zur Drehzahl oder Geschwindigkeit des Aufwicklers (4) festgelegt wird.

23. Verfahren nach einem oder mehreren der Ansprüche 18 bis 22,
**dadurch gekennzeichnet,**
**dass** der Faserführer (20) mit der Führungsrolle (21) mittels steuerbaren Hubmechanismus (22) zum präzisen Verlegen der Fasern (2) über der Aufwickelspule (17) parallel zur Spulenlängsachse zyklisch hin und her verfahren wird.

24. Verfahren nach Anspruch 23.
**dadurch gekennzeichnet,**
**dass** die Bewicklungsbreite der Faserlagen auf der Aufwickelspule (17) in Abhängigkeit der Gesamtlagenanzahl durch beidseitige Reduzierung des Faserführerhubs symmetrisch Verkürzt wird.

25. Verfahren nach einem oder mehreren der Ansprüche 18 bis 24,
**dadurch gekennzeichnet,**
**dass** der Faserführer (20) mit der Führungsrolle (21) mittels steuerbaren Hubmechanismus (24) zur Gewährleistung eines gleichbleibenden Abstandes zwischen der Führungsrolle (21) und der obersten Lage der Aufwickelspule (17) radial zur Rotationsachse der Aufwickelspule (17) kontinuierlich verfahren wird.

26. Verfahren nach Anspruch 25,
**dadurch gekennzeichnet,**
**dass** die Faserführereinheit (19) kontinuierlich an den, in Abhängigkeit der Gesamtlagenanzahl auf der Aufwickelspule (17), veränderlichen Aufwickelradius angepasst wird.

27. Verfahren nach einem oder mehreren der Ansprüche 18 bis 26.
**dadurch gekennzeichnet,**
**dass** zum Austausch der vollen Aufwickelspule (17.1) eine Nachfolgespule (17.2) auf der Spulenachse neben der vollen Aufwickelspule (17.1) platziert wird.

28. Verfahren nach Anspruch 27,
**dadurch gekennzeichnet,**
**dass** die Faserführereinheit (19) beim Spulenwechsel, vorzugsweise mittels eines Verfahrtisches (18), über die Nachfolgespule (17.2) gefahren wird.

29. Verfahren nach einem der Ansprüche 27 oder 28,
**dadurch gekennzeichnet,**
**dass** die Nachfolgespule (17.2) beim Spulenwechsel bei gleichzeitigem Verschieben der Aufwickelspule (17.1) unter die Faserführereinheit (19) gefahren wird.

## Claims

1. Apparatus (1) for making up a plurality of synchronously produced individual optical fibers (2), particularly individual multi-component fibers, comprising a drawing installation (3) configured to synchronously produce said plurality of individual optical fibers (2) as well as a take-up winder (4) for taking up the fibers to a take-up spool (17) where the drawing installation (3) has a speed compensating device to provide identical constant drawing speed of the optical fibers (2),
**characterized in**,
the take-up winder (4) comprising a compensating device (5) to provide compensation of difference in speeds of the fibers (2) when said fibers have respective different speeds at said drawing installation (3) and said take-up spool (17), that said compensating device (5) comprising a fiber guiding unit configured to continuously lay the fiber bundle on said take-up spool providing compensation of difference in speeds of the fiber bundle (2) caused by changing layers and/or between different wound-up radii of each layers on the take-up spool, that the speed-change compensating device comprising a dancing arm (12) fastened at a mounting point and said dancing arm (12) comprising a deflection roller (13) for guiding the fiber bundle (2) rotatably fastened to said dancing arm (12) and such that deflection roller (13) is pivotable about the mounting point of said dancing arm (12) in plane substantially parallel to the plane of rotation of said take-up spool (17) and that the deflection roller (13) in addition is held on the dancing arm (12) to perform a pivoting movement about the mounting point and can oscillate with respect to the pivoting movement.

2. Apparatus (1) according to claim 1,
**characterized in,**
**that** the drawing installation (3) is configured to bring the optical fibers (2) together to form a fiber bundle from optical fibers.

3. Apparatus (1) according to claim 1 and 2,
**characterized in,**
**that** said take-up winder (4) comprising a fiber guiding unit (19) configured to continuously lay the fiber bundle on said take-up spool (17).

4. Apparatus (1) according to claim 3,
**characterized in,**
**that** the fiber guiding unit (19) comprising at least one controllable excursion mechanism (22) and a fiber guide (20) with a guiding roller (21) for laying the fibers (2) over the take-up spool (17) and that at least one controllable excursion mechanism (22) acts on said fiber guide (20).

5. Apparatus (1) according to one of the claims 3 or 4,
**characterized in,**
**that** the take-up winder (4) has a layer-compensating device configured to adapt said fiber guiding unit (19) to at least one winding condition selected from the group consisting of change in a wound-up radius on said take-up spool (17) and a change in a winding width for layers of the optical fibers on said take-up spool (17).

6. Apparatus (1) according to claim 5,
**characterized in,**
**that** the layer-compensating device has at least one controllable excursion mechanism (24) for controlling a travelling displacement of at least one element selected from the group consisting of said fiber guide (20) and said guiding roller (21) and said at least on controllable excursion mechanism (24) controlling the travelling displacement in dependence on a number of layers of the optical fibers on said take-up spool (17) such that the travelling displacement is controlled in at least on direction selected from the group consisting of a direction substantially parallel to an axis of rotation of said take-up spool (17) and a direction substantially radial with respect to the axis of rotation of said take-up spool (17).

7. Apparatus (1) according to one or more of the claims 1 to 6,
**characterized in,**
**that** the deflection roller (13) and the take-up spool (17) have respective axes of rotation substantially parallel to one another.

8. Apparatus (1) according to one or more of the claims 1 to 7,
**characterized in,**
**that** the dancing arm (12) is an elastic arm including an elastic material, preferably plastic material, with a given modulus of elasticity such that said deflection roller (13) fastened thereto has a given oscillating capability.

9. Apparatus (1) according to one or more of the claims 1 to 8,
**characterized in,**
**that** the dancing arm (12) has at least one property selected from the group consisting of a given material thickness and a given shape such that said deflection roller (13) fastened thereto has a given oscillating capability.

10. Apparatus (1) according to one or more of the claims 1 to 9,
**characterized in,**
**that** the dancing arm (12) being assigned to a angular resolver at said mounting point (14) and said angular resolver transmitting data on angels of rotation to a speed controller which is operatively connected to said angular resolver for controlling a take-up rate of said take-up spool (17).

11. Apparatus (1) according to one or more of the claims 1 to 10,
**characterized in,**
**that** a central data processing unit operatively connected to at least one of said compensating device and said layer-compensating device controlling at least one of said compensating device for compensating for differences in speeds and said layer-compensating device for adapting said fiber guiding unit (19).

12. Apparatus (1) according to one or more of the claims 1 to 11,
**characterized in,**
**that** said dancing arm (12) is configured to be acted upon by compensating force (F), preferably provided by a pneumatic or hydraulic cylinder (15), at an equilibrium position during the process of drawing the optical fibers and taking up the fiber bundle on said take-up spool.

13. Apparatus (1) according to one or more of the claims 1 to 12,
**characterized in,**
**that** said dancing arm (12) is configured to be acted upon by a compensation force (F) preferable provided by a pneumatic or hydraulic cylinder (15) such that said dancing arm (12) is adjustable to a neutral position in case of an interruption or abnormal termination of the process of drawing the optical fibers and taking up the fiber bundle on said take-up spool (17).

14. Apparatus (1) according to one or more of the claims 1 to 13,
**characterized in,**
**that** said dancing arm (12) is configured to be acted upon by a compensation force (F) preferable provided by a adjustable pneumatic or a adjustable hydraulic cylinder (15) such that said dancing arm (12) is configured to set a tension in the fiber bundle (2).

15. Apparatus (1) according to one or more of the claims 1 to 13,
**characterized in,**
**that** said take-up spool (17) is fastened as a exchangeable take-up spool.

16. Apparatus (1) according to one or more of the claims 3 to 15,
**characterized in,**
**that** the take-up spool (17) has a spool axis and is an exchangeable take-up spool (17.1) to be exchanged by a replacement spool (17.2) which is placed adjacent to said take-up spool (17.1) in direction of said spool axis and is moved under said fiber guiding unit (19) for laying the fiber bundle (2) on said replacement spool (17.2) or that the fiber guiding unit (19) is configured to travelling over the replacement spool (17.2) during the exchange of the exchangeable spools (17.1).

17. Apparatus (1) according to claim 16,
**characterized in,**
**that** said central data processing unit is configured to controlling rotational speed of the replacement spool (17.2) via said compensating device (5) when fiber bundle (2) changes from exchangeable spool (17.1) to replacement spool (17.2) by at least one of a closed-loop control and an open-loop control .

18. Method for making up a plurality of synchronously produced individual optical fibers (2) with a apparatus (1) according to one or more of the claims 1 to 17, wherein the optical fibers (2) have been coated and bundled and passed as fiber bundle (2) via a deflection roller to a take-up winder (4),
**characterized in,**
**that** the difference in speeds of the drawing installation (3) and the take-up winder (4) is compensated via compensating device (5), that a change of wound-up speed of said fiber bundle (2) upon said take-up spool (17) is controlled by said data transmitted from said angular resolver by changing rotational speed of the take-up spool (17) and/or by a signal transmitted to said speed controlling unit indicating a position corresponding to the neutral position of the dancing arm (12) in order to stop the take-up winder (4).

19. Method according to claim 18,
**characterized in,**
**that** the individual optical fibers (2) passing over a sizing roller (8) of the drawing installation (3) as a band in order to provide a constant tensile stress.

20. Method according to claim 18 or 19,
**characterized in,**
**that** said individual optical fibers (2) are drawn all together, with a same drawing rate in each case, by using a drawing-off roller (6) and passing via a secondary roller (10), bundled as a fiber bundle (2), to the take-up winder (4) .

21. Method according to one or more of claims 18 to 20,
which comprises,
winding, via a guiding roller (21) the fiber bundle (2) layer by layer on a take-up spool (17) of the take-up winder (19) preferably by using a fiber guiding unit (19) for displacing the fiber bundle (2) on the take-up spool (17) with a adjustable offset per layer.

22. Method according to claim 21,
which comprises,
that the adjustable offset depends on ratio of a number of excursions of a fiber guide (20) of the fiber guiding unit (19) to a rotational speed of the take-up winder (4).

23. Method according to one or more of claims 18 to 22,
which comprises,
laying the optical fibers (2) over a take-up spool (17) of the take-up winder (4) by using the controllable excursion mechanism (22) and moving the fiber guild (20) with the guiding roller (21) cyclically back and forth parallel to a longitudinal axis of the take-up spool (17) .

24. Method according to claim 23,
which comprises,
symmetrically shortening a winding width of fiber layers on the take-up spool (17) in dependence on a total number of fiber layers on the take-up spool (17) by reducing an excursion of the fiber guide (20) on both sides of the take-up spool (17).

25. Method according to one or more of claims 18 to 24,
which comprises,
moving the fiber guide (20) with the guiding roller (21) continuously radially with respect to an axis of rotation of the take-up spool (17) by a controllable excursion mechanism (24) in order to ensuring a substantially constant distance between said guiding roller (21) and an uppermost layer on the take-up spool (17).

26. Method according to claim 25,
which comprises,
adapting said fiber guiding unit (19) including the fiber guide (20) and the controllable excursion mechanism (24) to a wound-up radius changing in dependence on a total number of layers on the take-up spool (17).

27. Method according to one or more of claims 18 to 26,
which comprises,
exchanging a full take-up spool (17.1) with a replacement spool (17.2) by placing the replacement spool (17.2) adjacent to the full take-up spool (17.1) in a direction along a spool axis of the full take-up spool (17.1).

28. Method according to claim 27,
which comprises
moving a fiber guiding unit (19) over the replacement spool (17.2), preferable by using a travelling table (18), when exchanging the full take-up spool (17.1).

29. Method according to one or more of claims 27 or 28,
which comprises,
moving the replacement spool (17.2) under a fiber guiding unit (19) and simultaneously displacing the full take-up spool (17.1) when exchanging the full take-up spool (17.1).

## Revendications

1. Dispositif (1) de fabrication d'une pluralité de fibres optiques individuelles (2) fabriquées de manière synchrone, en particulier de fibres de verre à composants multiples, à partir d'une installation de tirage à fibres multiples comportant une installation de tirage (3) ainsi qu'un enrouleur (4) destiné à enrouler les fibres (2) sur une bobine d'enroulement (17), l'installation de tirage (3) possédant un moyen permettant de réaliser une vitesse de tirage identique et constante des fibres (2),
**caractérisé**
**en ce que** l'enrouleur (4) possède un dispositif de compensation (5), destiné à compenser les différences de vitesse des fibres (2) entre l'installation de tirage (3) et la bobine d'enroulement (17), en ce que le dispositif de compensation (5) possède un moyen de compensation de la variation de vitesse du faisceau de fibres (2) en cas de changement de couche et/ou en raison du rayon d'enroulement variable des différentes couches sur la bobine d'enroulement (17), en ce que le moyen de compensation de la variation de vitesse possède un bras danseur (12) sur lequel est fixé de manière rotative un galet de renvoi (13) destiné à guider le faisceau de fibres (2) et qui est fixé d'un côté sur le bras danseur (12) de manière oscillante autour du point de fixation (14) du bras danseur (12), parallèlement à un plan de rotation de la bobine d'enroulement (17), et en ce que le galet de renvoi (13) est fixé de manière oscillante sur le bras danseur (12), par rapport au mouvement d'oscillation autour du point de fixation (14).

2. Dispositif (1) selon la revendication 1, **caractérisé en ce que** les fibres (2) sont aptes à être regroupées en un faisceau de fibres dans l'installation de tirage (3).

3. Dispositif (1) selon l'une des revendications 1 et 2, **caractérisé en ce que** l'enrouleur (4) possède une unité (19) de guidage des fibres et **en ce que** le faisceau de fibres (2) est apte à être posé sur la bobine d'enroulement (17) de manière continue grâce à l'unité (19) de guidage des fibres.

4. Dispositif (1) selon la revendication 3, **caractérisé en ce que** l'unité (19) de guidage des fibres possède au moins un mécanisme de levage asservi (22) qui sollicite un guide-fibres (20) comportant un rouleau de guidage (21) pour la pose des fibres (2) sur la bobine d'enroulement (17).

5. Dispositif (1) selon l'une des revendications 3 ou 4, **caractérisé en ce que** l'enrouleur (4) possède un moyen de compensation des couches destiné à adapter l'unité (19) de guidage des fibres au rayon d'enroulement variable et/ou au raccourcissement de la largeur d'enroulement des couches de fibres sur la bobine d'enroulement (17).

6. Dispositif (1) selon la revendication 5, **caractérisé en ce que** le moyen de compensation des couches présente au moins un mécanisme de levage asservi (24) grâce auquel peut être réglée la distance de course du guide-fibres (20) et/ou du rouleau de guidage (21), en fonction du nombre des couches de fibres sur la bobine d'enrouement (17), parallèlement et/ou radialement par rapport à l'axe de rotation de la bobine d'enroulement (17).

7. Dispositif (1) selon l'une ou plusieurs des revendications 1 à 6, **caractérisé en ce que** le galet de renvoi (13) et la bobine d'enroulement (17) présentent des axes de rotation qui sont sensiblement parallèles entre eux.

8. Dispositif (1) selon l'une ou plusieurs des revendications 1 à 7, **caractérisé en ce que** le bras danseur (12), afin de garantir une capacité prédéterminée d'oscillation du galet de renvoi (13) qui lui est fixé, est fabriqué dans un matériau élastique offrant un module d'élasticité prédéterminé, de préférence en matière plastique.

9. Dispositif (1) selon l'une ou plusieurs des revendications 1 à 8, **caractérisé en ce que** le bras danseur (12), afin de garantir une capacité prédéterminée d'oscillation du galet de renvoi (13) qui lui est fixé, possède une épaisseur de matériau et/ou une forme prédéterminées.

10. Dispositif (1) selon l'une ou plusieurs des revendications 1 à 9, **caractérisé en ce que** le bras danseur (12) est associé au niveau du point de fixation (14) à un capteur angulaire grâce auquel des données angulaires peuvent être transmises à la commande de la vitesse afin de commander la vitesse d'enroulement de la bobine d'enroulement (17).

11. Dispositif (1) selon l'une ou plusieurs des revendications 1 à 10, **caractérisé en ce que** le dispositif de compensation (5), destiné à compenser les différences de vitesse, et/ou le moyen de compensation des couches, destiné à adapter l'unité (19) de guidage des fibres, sont aptes à être régulés par une unité centrale de traitement de données.

12. Dispositif (1) selon l'une ou plusieurs des revendications 1 à 11, **caractérisé en ce que** le bras danseur (12) est apte à être placé dans une position d'équilibre à l'aide d'une force de compensation (F), de préférence un vérin pneumatique ou hydraulique (15), pendant le processus de tirage et d'enroulement.

13. Dispositif (1) selon l'une ou plusieurs des revendications 1 à 12, **caractérisé en ce que** le bras danseur (12) est apte à être placé dans une position nulle à l'aide d'une force de compensation (F), de préférence un vérin pneumatique ou hydraulique (15), en cas d'interruption ou d'abandon du processus de tirage et d'enroulement.

14. Dispositif (1) selon l'une ou plusieurs des revendications 1 à 13, **caractérisé en ce qu'**une tension dans le faisceau de fibres (2) est apte à être réglée par le bras danseur (12), de préférence à l'aide d'un vérin pneumatique ou hydraulique réglable (15).

15. Dispositif (1) selon l'une ou plusieurs des revendications 1 à 14, **caractérisé en ce que** la bobine d'enroulement (17) est fixée de manière interchangeable.

16. Dispositif (1) selon l'une ou plusieurs des revendications 3 à 15, **caractérisé en ce que**, pour le replacement de la bobine d'enroulement pleine (17.1), une bobine de remplacement (17.2) est apte à être placée dans la direction de l'axe de la bobine, près de la bobine d'enroulement pleine (17.1), et **en ce que** l'unité (19) de guidage des fibres est apte à se placer au-dessus de la bobine de remplacement (17.2) ou encore la bobine de remplacement (17.2) est apte à venir se placer au-dessous de l'unité (19) de guidage des fibres, afin de continuer la pose du faisceau de fibres (2).

17. Dispositif (1) selon la revendication 16, **caractérisé en ce que** la vitesse de rotation de la bobine de remplacement (17.2) est apte à être régulée et/ou commandée par le dispositif de compensation (5), en passant par l'unité centrale de traitement des données, lors du transfert du faisceau de fibres (2) à partir de la bobine d'enroulement pleine (17.1).

18. Procédé de fabrication d'une pluralité de fibres optiques individuelles (2) fabriquées de manière synchrone, à l'aide d'un dispositif (1) selon l'une ou plusieurs des revendications 1 à 17, les fibres (2) étant ensimées et mises en faisceau et envoyées à l'enrouleur (4) par des moyens de renvoi,
**caractérisé**
**en ce que** les différences de vitesse du faisceau de fibres (2) entre l'installation de tirage (3) et l'enrouleur (4) sont compensées par le dispositif de compensation (5), en ce que les variations de la vitesse d'enroulement du faisceau de fibres (2) sur la bobine d'enroulement (17) sont compensées, sur la base des données fournies par le capteur angulaire, par l'unité de régulation de la vitesse, qui modifie la vitesse de rotation de la bobine d'enroulement (17) et/ou en ce qu'un signal correspondant à la position nulle du bras danseur (12) est envoyé à l'unité de régulation de la vitesse afin d'arrêter l'enrouleur (4).

19. Procédé selon la revendication 18, **caractérisé en ce que** les fibres individuelles (2), afin de réaliser une contrainte de tension constante de l'installation de tirage (3), sont guidées en forme de ruban sur au moins un rouleau d'ensimage (8).

20. Procédé selon l'une des revendications 18 ou 19, **caractérisé en ce que** les fibres individuelles (2) sont tirées par le rouleau de tirage (6) avec une vitesse de tirage identique dans leur ensemble et sont mises en faisceau sur un rouleau auxiliaire (10) pour être envoyées à l'enrouleur (4).

21. Procédé selon l'une ou plusieurs des revendications 18 à 20, **caractérisé en ce que** le faisceau de fibres (2) est enroulé sur la bobine d'enroulement (17) à l'aide de l'unité (19) de guidage des fibres agissant sur le rouleau de guidage (21), couche après couche, de préférence avec un décalage paramétrable par couche.

22. Procédé selon la revendication 21, **caractérisé en ce que** le décalage est déterminé par le rapport réglable entre le nombre de courses du guide-fibres (20) et la vitesse de rotation ou vitesse de l'enrouleur (4).

23. Procédé selon l'une ou plusieurs des revendications 18 à 22, **caractérisé en ce que** le guide-fibres (20) est déplacé cycliquement en va-et-vient avec le rouleau de guidage (21), parallèlement à l'axe longitudinal de la bobine, par un mécanisme de levage asservi (22) afin de positionner précisément les fibres (2) sur la bobine d'enroulement (17).

24. Procédé selon la revendication 23, **caractérisé en ce que** la largeur d'enroulement des couches de fibres sur la bobine d'enroulement (17) est raccourcie symétriquement en fonction du nombre total de couches, sous la forme d'une réduction bilatérale de la course du guide-fibres.

25. Procédé selon l'une ou plusieurs des revendications 18 à 24, **caractérisé en ce que** le guide-fibres (20) est déplacé en continu avec le rouleau de guidage (21), dans la direction radiale par rapport à l'axe de rotation de la bobine d'enroulement (17), par des mécanismes de levage asservis (24), afin de garantir une distance constante entre le rouleau de guidage (21) et la couche supérieure de la bobine d'enroulement (17).

26. Procédé selon la revendication 25, **caractérisé en ce que** l'unité (19) de guidage des fibres est adaptée en continu au rayon d'enroulement variable, en fonction du nombre total de couches sur la bobine d'enroulement (17) .

27. Procédé selon l'une ou plusieurs des revendications 18 à 26, **caractérisé en ce que**, pour le remplacement de la bobine d'enroulement pleine (17.1), une bobine de remplacement (17.2) est placée sur l'axe de la bobine à côté de la bobine d'enroulement pleine (17.1).

28. Procédé selon la revendication 27, **caractérisé en ce que** l'unité (19) de guidage des fibres, lors du changement de bobine, vient se placer au-dessus de la bobine de remplacement (17.2), de préférence à l'aide d'une table de positionnement (18).

29. Procédé selon l'une des revendications 27 ou 28, **caractérisé en ce que** la bobine de remplacement (17.2), lors du changement de bobine, tout en poussant simultanément la bobine d'enroulement (17.1), vient se placer au-dessous de l'unité (19) de guidage des fibres.
